# EUROPEAN PATENT SPECIFICATION

(11) **EP 0 820 625 B1**
(45) Date of publication and mention of the grant of the patent: **02.05.2003**
(21) Application number: 97900394.4
(22) Date of filing: 24.01.1997
(51) Int. Cl.: G10L 19/00, G06F 3/16

(54) **DICTATION SYSTEM**
DIKTIERSYSTEM
SYSTEME DE DICTEE

(30) Priority: 12.02.1996 EP 96200328
(43) Date of publication of application: 28.01.1998
(73) Proprietor: Koninklijke Philips Electronics N.V., 5621 BA Eindhoven (NL)
(72) Inventor: BÖLDL, Herbert, NL-5656 AA Eindhoven (NL)
(74) Representative: van der Kruk, Willem Leonardus
(86) International application number: PCT/IB97/00048
(87) International publication number: WO 97/029578

(56) References cited:
- WO-A-95/28702
- US-A- 5 481 645
- IEEE TRANSACTIONS ON CONSUMER ELECTRONICS, Volume 38, No. 3, August 1992, KIYOSHI OKUZAWA et al., "Development of a Solid State Sound Recorder System", pp. 364-370.
- PATENT ABSTRACTS OF JAPAN, Vol. 96, No. 3; & JP,A,08 083 099 (OKI ELECTRIC IND CO LTD), 26 March 1996.

## Description

The invention relates to a dictation system, comprising a hand held dictation device for storing a speech signal in memory means, the device comprising data compression means for data compressing the speech signal into a data compressed speech signal, storing means for storing the data compressed speech signal in the memory means. The data compression means are adapted to carry out a data compression step on the speech signal in one of at least two different data compression modes, the at least two different data compression modes resulting in different data compression ratios when applied to the same speech signal, the said at least two different data compression modes being selectable by a user, the data compression means being further adapted to create data files comprising portions of the data compressed speech signal and being adapted to generate an identifier signal identifying the data compression mode selected.

The invention further relates, to a hand held dictation device, a transcription device and to a removable solid state memory unit for use in the dictation system. A dictation system as defined in the opening paragraph is well known in the art.

Data compression may be realized in prior art dictation systems by discarding the silence periods normally present in the speech signal. Further, one may store an indication signal indicating the length of the silence period and its location in the speech signal. Upon transcription, a replica of the speech signal can be regenerated by inserting silence periods of the same length at the indicated positions in the compressed speech signal.

US 5,481,645 discloses a portable computer capable of converting signals originating from a microphone into digital voice signals to be stored in a memory. Identification means are provided for storing the voice signals in locations of the memory as indiviually identifiable verbal inserts and for associating with each insert a pertinent identification code, comprising information about the compression method used for said verbal insert, and means for visually displaying on a screen data associated with the identification codes of the verbal inserts. The identification codes of the digital voice signals are stored separately from the digital voice signals together with the start address of the digital voice signals.

The invention aims at providing an improved dictation system. The dictation system in accordance with the invention is characterized in that the data files comprise a header portion, the data compression means being adapted to store said identifier signal in said header portion. The invention is based on the following recognition. The memory capacity of memories included in dictation apparatuses is limited. Preferably, an increased number of dictations should be stored in a memory. This has been realized in the prior art by leaving out the silence periods present in a speech signal. A larger compression ratio can be obtained by applying more powerful compression techniques. More specifically, lossy compression techniques result in large data compression ratios. Larger data reduction ratios, however, may lead to a decrease in quality of the retrieved signal upon data expansion. In accordance with the invention, a dictation system has been proposed in which the user has the possibility to choose one data compression mode from two or more data compression modes in which the hand held dictation device can compress the speech signal. The user can make a trade off between the number of speech messages that he wants to dictate and store in one memory unit and the quality of the speech signal upon reproduction. If the user wants to have more dictations stored in the memory, he will select the data compression mode giving a higher data compression ratio. If the user prefers a higher quality of reproduction, he will choose the data compression mode giving a lower data compression ratio.

The subclaims define preferred embodiments of the dictation system, the hand held dictation device, a transcription device and the removable solid state memory unit.

These and other aspects of the invention will be apparent from and elucidated further with reference to the embodiments described in the following figure description, in which
figure 1 shows an embodiment of the hand held dictation device,
figure 2 shows an embodiment of the memory card for use in the hand held dictation device,
figure 3 shows the circuit diagram in the hand held dictation device,
figure 4 shows the sequence of signal blocks generated by the processor in the hand held dictation device, and
figure 5 shows an embodiment of a transcription apparatus, either in table top, or in PC form.

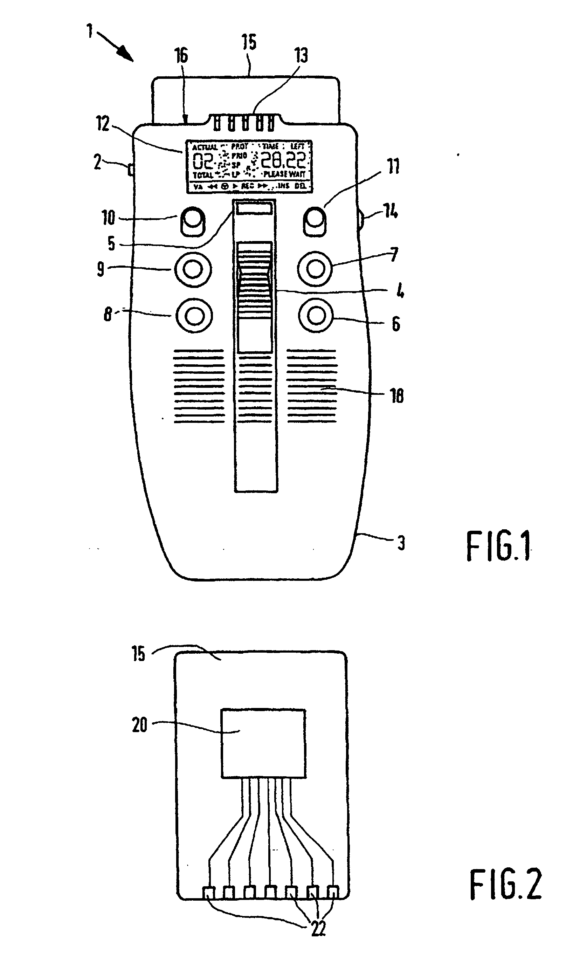

Figure 1 shows a front view of a handheld dictation device 1 provided with an on/off switch 2 located on the side of the housing of the device. At the bottom of the housing a battery compartment 3 (not shown) is provided that can be reached at the back of the housing. A sliding switch 4 is provided on the front face of the housing for switching the device in the various dictation modes. The device is provided with a number of buttons: button 5 is the record button, button 6 is the LETTER button, button 7 is the MODE button, button 8 is the INSERT button and button 9 is the DELETE button. The switch 10 is the recording mode switch. The switch 11 is the sensitivity switch. The device 1 is further provided with a LCD display for displaying various information regarding a dictation, such as the recording time of the dictation, the recording time left, the recording mode, the number of dictations, etc.

A microphone 13 and a loudspeaker 18 are provided in the housing and a volume control knob 14 is provided on the side of the housing. Further, a slot 16 is provided in the top face of the device for receiving a memory card 15.

The memory card 15 is also shown in figure 2. The memory card 15 is provided with a solid state memory 20 and with electrical terminals 22 connected to the solid state memory 20. The solid state memory 20 can eg. be an EEPROM or a flash erasable memory. The electrical terminals 22 can be such that they enable an electrical cooperation with the internationally standardized PCMCIA interface of a PC.

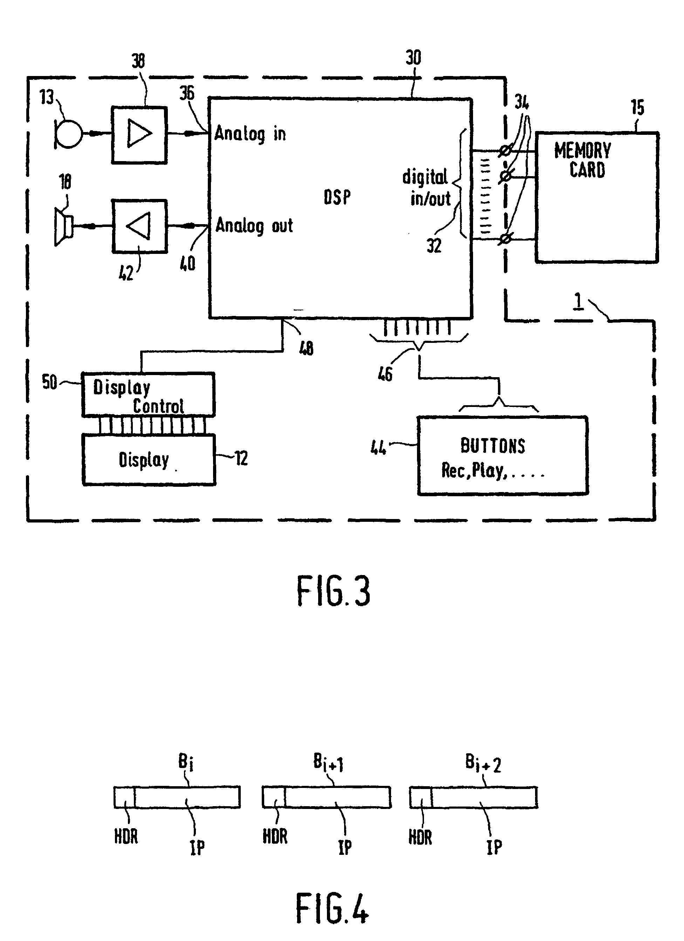

Figure 3 shows the electrical construction of the device 1 and its cooperation with the memory card 15. The device 1 comprises a digital signal processor 30, having a digital input/output 32 coupled to terminals 34 that are electrically coupled to the terminals 22 of the memory card 15, when positioned in the slot 16. The microphone 13 is coupled to an analog input 36 of the processor 30, if required via an amplifier 38. The processor 30 further comprises an analog output 40 which is coupled to the loudspeaker 18 via an amplifier 42. The various knobs and buttons, denoted in figure 3 by the reference numeral 44 are coupled to control inputs 46 of the processor 30. Further, a control output 48 of the processor 30 is coupled to a display control unit 50 for controlling the display of information on the display 12.

The user places the memory card 15 into the slot 16 of the device 1 until the terminals 22 of the memory card 15 come into contact with electrical terminals 34 provided in the slot of the device 1. The memory card is now in electrical and mechanical contact with the device 1.

The processor 30 is capable of receiving the analog speech signals via the input 36 and to A/D convert the speech signal into a digital speech signal. Further, upon selection by the user, the processor 30 is capable of carrying out one of at least two different data compression steps on the digital speech signal. Suppose, the processor 30 is capable of carrying out two data compression steps on the speech signal. Each compression step carried out on the same speech signal results in different compression ratios. The data compression steps can be in the form of lossless compression steps. This means that no data is actually lost and the original speech signal can be fully recovered upon data expansion. One example of a lossless data compression method is linear predictive coding followed by a Huffman encoding carried out on the output signal of the linear predictive coder. Data compression can also be lossy. One such lossy data compression step is subband coding, well known in the art and applied in DCC digital magnetic recording systems. In lossy compression methods, part of the information that is unaudible is actually thrown away. Upon data expansion, a replica of the original speech signal is recovered. As the information that is left out upon data compression was unaudible, the replica of the speech signal will be heard by the user as being the same as the original speech signal.

The processor 30 may be capable of carrying out a lossless data compression step on the speech signal and a lossy data compression step, as the two different data compression steps that can be realized by the processor 30. As an alternative, the processor 30 can carry out two different lossless data compression steps resulting in different data compression ratios. As again another alternative, the processor 30 may be capable of carrying out two different lossless data compression steps on the speech signal, resulting in two different data compression ratios. As an example of the last possibility: the processor 30 could be provided with a simple subband encoder as applied in DCC. The subband encoder can be simple as less subbands are required for encoding the speech signal. Less subbands are required, eg. 5 instead of the 32 in the DCC subband encoder, as the bandwidth of the speech signal is much smaller than a wideband audio signal. Different compression ratios can be obtained with the simplified subband encoder by changing the bitpool for the bitallocation step in the simplified subband encoder. Reference is made in this respect to the documents (1), (2), (3a) and (3b) in the list of documents that can be found at the end of this description.

When the user wants to record a speech message into the device, he depresses the LETTER button 6, which indicates that the user wants to store a speech message. Further, the user can actuate the MODE button 7 in order to select various modes, such as whether the speech message should have a (high) priority, or whether the speech message should be protected from overwriting. Subsequently the user selects a recording mode by actuating the button 10. Selecting the recording mode means that the user selects a data compression mode. If the user wants a relatively good quality recording, he/she chooses the data compression mode resulting in the lowest data compression ratio. As a result, a larger amount of information will be stored in the memory 20 for the said dictation, so that less dictations can be stored in said memory. If the user wants as many dictations as possible being stored in the memory 20, he/she will choose the data compression mode resulting in the higher data compression ratio. A lower quality storage of the dictations may be the result.

The compressed information is included in blocks of information (or 'files') ..., Bᵢ, Bᵢ₊₁, Bᵢ₊₂, .... This is shown in figure 4. Each block of information Bᵢ has a header portion, denoted HDR, and an information portion, denoted IP. Further, an identifier signal is stored in the header portion. The identifier signal in a header portion HDR of a signal block identifies the compression mode applied on the speech signal in order to generate the data compressed information stored in the information portion IP of that same signal block. The sequence of signal blocks is supplied to the digital output 32 of the processor 30 and subsequently stored in the memory 20 on the memory card 15.

It should be noted here, that the processor 30 could generate signal blocks as long as required to store the information of exactly one speech message in. The processor 30 may also be adapted to generate signal blocks of fixed length, and that the data compressed information of a speech message is stored in a plurality of subsequent signal blocks generated by the processor 30.

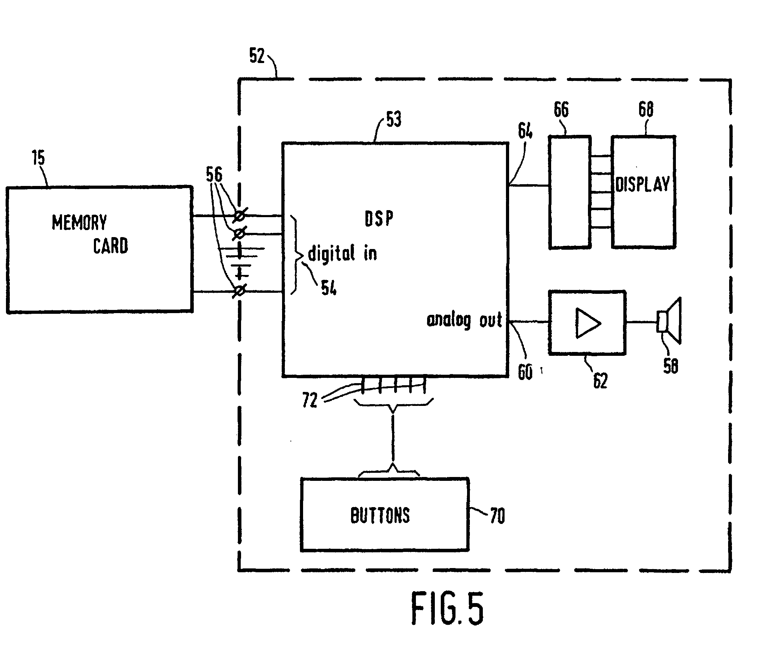

If the user wants to the speech message stored in the memory 20, the processor 30 is capable of retrieving the data compressed information from the memory 20 and carry out a data expansion step on the data compressed information stored in the memory. It will be clear that the data expansion step will be the inverse of the data compression step carried out during dictation. The data expansion step to be carried out in the processor 30 will be further explained hereafter, with respect to an embodiment of a transcription apparatus, as shown in figure 5. After having obtained a replica of the speech signal, this speech signal is D/A converted in the processor and supplied to the output 40, for reproduction by the loudspeaker 18.

For transcription of the speech messages stored in the memory 20 on the memory card 15, the memory card 15 is withdrawn from the device 1 and inserted in a table top transcription apparatus 50, see figure 5. The transcription apparatus 52 comprises a digital signal processor 53, having a digital input 54 coupled to terminals 56 that are electrically coupled to the terminals 22 of the memory card 15, when positioned in a slot (not shown) provided in the apparatus 52. A loudspeaker 58 is coupled to an analog output 60 of the processor 53, via an amplifier 62. The processor 53 further comprises a control output 64 which is coupled to a display control unit 66 for controlling the display of information on a display 68. A keyboard 70 is coupled to control inputs 72 of the processor 53.

The user places the memory card 15 into the slot (not shown) of the transcription apparatus 52 until the terminals 22 of the memory card 15 come into contact with electrical terminals 56 provided in the slot of the transcription apparatus 52. The memory card is now in electrical and mechanical contact with the apparatus 52.

Upon actuating a 'RETRIEVE' button on the keyboard 70, the information stored in the memory 20 on the memory card 15 is read out and stored in an internal memory of the digital signal processor 53. The processor 53 is capable of carrying out one of at least two different data expansion steps on the digital information retrieved from the memory card. It will be clear that the expansion mode carried out in the processor 53 is the inverse of the compression mode carried out during the dictation step in the processor 30. The processor 53 retrieves the identifier signal from the header portions HDR of the signal blocks and carries out a data expansion step in response to the identifier signal. As a result, a replica of the digital speech signal is obtained.

The processor 53 is further capable of D/A converting the replica of the digital speech signal into an analog speech signal and to supply the analog speech signal via the output 60 to the loudspeaker 58, so that a typist or other person can hear the speech signal that need to be transcribed.

The typist can type in the speech message reproduced via the loudspeaker using the keyboard 70, so as to obtain a typed version of the speech message.

In another embodiment of the transcription apparatus 52, when realized in the form of a personal computer, having a sufficiently large memory capacity, the apparatus may be provided with a speech recognition algorithm which enables the apparatus to generate a character file from the speech signal as a result of such speech recognition step. The character file could be made visible on the display 68, so that the typist can check for errors by reading the text on the display screen 68 and hearing the speech message via the loudspeaker 58, and correct those errors using the keyboard 70.

Previously an example of a lossless data compression method has been described, namely: linear predictive coding followed by a Huffman encoding. It will speak for itself that the processor 53 must be capable of carrying out a corresponding Huffman decoding followed by a corresponding linear predictive decoding in order to regenerate the original speech signal.

An example of a lossy data compression step has also been described, namely: subband coding. It will speak for itself that the processor 53 must be capable of carrying out a corresponding subband decoding in order to regenerate a replica of the original speech signal.

Whilst the present invention has been described with respect to preferred embodiments thereof, it is to be understood that these are not limitative examples. Thus, various modifications may become apparent to those skilled in the art, without departing from the scope of the invention, as defined by the claims. Further, the invention lies in each and every novel feature or combination of features as herein disclosed.

### Related documents

- (1): European Patent Application no. 402,973 (PHN 13.241).
- (2): European Patent Application no. 400.755 (PHQ 89.018A).
- (3a): European Patent Application no. 457,390 (PHN 13.328).
- (3b): European Patent Application no. 457,391 (PHN 13.329).

## Claims

1. A dictation system comprising a hand held dictation device (1) for storing a speech signal in memory means (15), the device comprising data compression means (30) for data compressing the speech signal into a data compressed speech signal, storing means for storing the data compressed speech signal in the memory means, the data compression means being adapted to carry out a data compression step on the speech signal in one of at least two different data compression modes, the at least two different data compression modes resulting in different data compression ratios when applied to the same speech signal, the said at least two different data compression modes being selectable by a user, the data compression means being further adapted to create data files (Bᵢ, Bᵢ₊₁, Bᵢ₊₂) comprising portions of the data compressed speech signal (IP) and being adapted to generate an identifier signal identifying the data compression mode selected, **characterized in that** the data files comprise a header portion (HDR) the data compression means being adapted to store said identifier signal in said header portion.

2. Dictation system as claimed in claim 1, **characterized in that**, the memory means comprise a removable solid state memory unit for storing the data files, the solid state memory unit being provide with coupling means for mechanically and electrically coupling the memory unit to the hand held dictation device.

3. Dictation system as claimed in claim 2, **characterized in that** the coupling means are further adapted to mechanically and electrically couple the memory unit to a PC.

4. Dictation system as claimed in claim 3, **characterized in that** the coupling means are adapted to mechanically and electrically couple the memory unit to an internationally standardized interface of the PC.

5. Dictation system as claimed in claim 4, **characterized in that** said interface is a PCMCIA interface.

6. Dictation system as claimed in anyone of the claims 2 to 5, **characterized in that** the solid state memory unit comprise an EEPROM.

7. Dictation system as claimed in anyone of the claims 2 to 5, **characterized in that** the solid state memory unit comprise a Flash erasable memory unit.

8. Dictation system as claimed in anyone of the claims 1 to 5, **characterized in that** the solid state memory unit comprise a back-up battery.

9. Dictation system as claimed in anyone of the preceding claims, **characterized in that** the data compression means are adapted to carry out a data compression step on the speech signal in one of at least two different data compression modes, at least one of the said at least two different data compression modes being a lossy data compression mode.

10. Handheld dictation device (1) for use in the system as claimed in anyone of the preceding claims, the device comprising data compression means (30) for data compressing the speech signal into a data compressed speech signal, data compression means being adapted to carry out a data compression step on the speech signal in one of at least two different data compression modes, the at least two different data compression modes resulting in different data compression ratios, the said at least two different data compression modes being selectable by a user, the data compression means being further adapted to create data files (Bᵢ, Bᵢ₊₁, Bᵢ₊₂) comprising portions of the data compressed speech signal (IP) and being adapted to generate an identifier signal identifying the data compression mode selected, **characterized in that** the data files comprise a header portion (HDR), the data compression means being adapted to store said identifier signal in said header portion.

11. Handheld dictation device as claimed in claim 10, **characterized in that** it is provided with coupling means for mechanically and electrically cooperating with coupling means of a removable solid state memory unit.

12. Handheld dictation device as claimed in claim 11, **characterized in that** the coupling means are in accordance with an internationally standardized interface.

13. Handheld dictation device as claimed in claim 12, **characterized in that** said interface is a PCMCIA interface.

14. Handheld dictation device as claimed in anyone of the claims 10 to 13, **characterized in that** the data compression means are adapted to carry out a data compression step on the speech signal in one of at least two different data compression modes, at least one of said at least two different data compression modes being a lossy data compression mode.

15. Transcription device for transcribing speech messages, comprising data expansion means adapted to carry out a data expansion step on a data compressed speech signal stored in memory means, the said data compressed speech signal being data compressed in one of at least two different data compression modes, the at least two different data compression modes resulting in different data compression ratios when applied to the same speech signal, the data compressed speech signal being stored in the memory means in data files (Bᵢ, Bᵢ₊₁, Bᵢ₊₂) comprising portions of the data compressed speech signal (IP), **characterized in that** the data files comprise a header portion (HDR) in which an identifier signal is stored, the identifier signal identifying the data compression mode selected during data compressing the speech signal, the data expansion means being adapted to retrieve the identifier signal from header portions and being adapted to carry out one of at least two different expansion modes on the data compressed information stored in the files in response to the identifier signal so as to obtain a replica of the speech signal.

16. Transcription device as claimed in claim 15, **characterized in that** the memory means is in the form of a removable solid state memory unit and that the transcription device is provided with coupling means for mechanically and electrically cooperating with coupling means of the solid state memory unit.

17. Transcription device as claimed in claim 16, **characterized in that** the coupling means are in accordance with an internationally standardized interface.

18. Transcription device as claimed in claim 17, **characterized in that** said interface is a PCMCIA interface.

19. Removable solid state memory unit, comprising a data compressed speech signal, the said data compressed speech signal being data compressed in one of at least two different data compression modes, the at least two different data compression modes resulting in different data compression ratios when applied to the same speech signal, the data compressed speech signal being stored in the memory unit in data files comprising portions (IP) of the data compressed speech signal, **characterized in that** the data files comprise a header portion (HDR) in which an identifier signal is stored, the identifier signal identifying the data compression mode selected during data compressing the speech signal.

20. Solid state memory unit as claimed in claim 19, **characterized in that** it is provided with coupling means for mechanically and electrically coupling the memory unit to a PC.

21. Solid state memory unit as claimed in claim 20, **characterized in that** the coupling means are adapted to mechanically and electrically couple the memory unit to an internationally standardized interface of the PC.

22. Solid state memory unit as claimed in claim 21, **characterized in that** said interface is a PCMCIA interface.

## Patentansprüche

1. Diktiersystem mit einer in der Hand gehaltenen Diktiereinrichtung (1) zum Speichern eines Sprachsignals in Speichermitteln (15), wobei die Einrichtung Datenkompressionsmittel (30) zum Datenkomprimieren des Sprachsignals in ein datenkomprimiertes Sprachsignal umfasst, Speicherungsmittel zum Speichern des datenkomprimierten Sprachsignals in den Speichermitteln, wobei die Datenkompressionsmittel ausgebildet sind, um am Sprachsignal einen Datenkompressionsschritt in einem von zumindest zwei unterschiedlichen Datenkompressionsmodi auszuführen, wobei die zumindest zwei unterschiedlichen Datenkompressionsmodi zu unterschiedlichen Datenkompressionsverhältnissen führen, wenn sie auf das gleiche Sprachsignal angewendet werden, wobei die genannten zumindest zwei unterschiedlichen Datenkompressionsmodi von einem Benutzer selektiert werden können, wobei die Datenkompressionsmittel weiterhin zum Verschaffen von Datendateien (Bᵢ, Bᵢ₊₁, Bᵢ₊₂) ausgebildet sind, die Abschnitte des datenkomprimierten Sprachsignals (IP) umfassen, und zum Generieren eines Kennungssignals ausgebildet sind, das den selektierten Datenkompressionsmodus identifiziert, **dadurch gekennzeichnet, dass** die Datendateien einen Headerabschnitt (HDR) umfassen, wobei die Datenkompressionsmittel zum Speichern des genannten Kennungssignals in dem genannten Headerabschnitt ausgebildet sind.

2. Diktiersystem nach Anspruch 1, **dadurch gekennzeichnet, dass** die Speichermittel eine abnehmbare Festkörperspeichereinheit zum Speichern der Datendateien umfassen, wobei die Festkörperspeichereinheit mit Kopplungsmitteln versehen ist, um die Speichereinheit mechanisch und elektrisch mit der in der Hand gehaltenen Diktiereinrichtung zu koppeln.

3. Diktiersystem nach Anspruch 2, **dadurch gekennzeichnet, dass** die Kopplungsmittel weiterhin ausgebildet sind, um die Speichereinheit mechanisch und elektrisch mit einem PC zu koppeln.

4. Diktiersystem nach Anspruch 3, **dadurch gekennzeichnet, dass** die Kopplungsmittel ausgebildet sind, um die Speichereinheit mechanisch und elektrisch mit einer international standardisierten Schnittstelle des PC zu koppeln.

5. Diktiersystem nach Anspruch 4, **dadurch gekennzeichnet, dass** die genannte Schnittstelle eine PCMCIA-Schnittstelle ist.

6. Diktiersystem nach einem der Ansprüche 2 bis 5, **dadurch gekennzeichnet, dass** die Festkörperspeichereinheit einen EEPROM umfasst.

7. Diktiersystem nach einem der Ansprüche 2 bis 5, **dadurch gekennzeichnet, dass** die Festkörperspeichereinheit eine löschbare Flash-Speichereinheit umfasst.

8. Diktiersystem nach einem der Ansprüche 1 bis 5, **dadurch gekennzeichnet, dass** die Festkörperspeichereinheit eine Back-up-Batterie umfasst.

9. Diktiersystem nach einem der vorhergehenden Ansprüche, **dadurch gekennzeichnet, dass** die Datenkompressionsmittel ausgebildet sind, um an dem Sprachsignal einen Datenkompressionsschritt in einem von zumindest zwei unterschiedlichen Datenkompressionsmodi auszuführen, wobei zumindest einer der genannten zumindest zwei unterschiedlichen Datenkompressionsmodi ein verlustbehafteter Datenkompressionsmodus ist.

10. In der Hand gehaltene Diktiereinrichtung (1) zur Verivendung in dem System nach einem der vorhergehenden Ansprüche, wobei die Einrichtung Datenkompressionsmittel (30) zum Datenkomprimieren des Sprachsignals in ein datenkomprimiertes Sprachsignal umfasst, wobei die Datenkompressionsmittel ausgebildet sind, um am Sprachsignal einen Datenkompressionsschritt in einem von zumindest zwei unterschiedlichen Datenkompressionsmodi auszuführen, wobei die zumindest zwei unterschiedlichen Datenkompressionsmodi zu unterschiedlichen Datenkompressionsverhältnissen führen, wobei die genannten zumindest zwei unterschiedlichen Datenkompressionsmodi von einem Benutzer selektiert werden können, wobei die Datenkompressionsmittel weiterhin zum Verschaffen von Datendateien (Bᵢ, Bᵢ₊₁, Bᵢ₊₂) ausgebildet sind, die Abschnitte des datenkomprimierten Sprachsignals (IP) umfassen, und zum Generieren eines Kennungssignals ausgebildet sind, das den selektierten Datenkompressionsmodus identifiziert, **dadurch gekennzeichnet, dass** die Datendateien einen Headerabschnitt (HDR) umfassen, wobei die Datenkompressionsmittel zum Speichern des genannten Kennungssignals in dem genannten Headerabschnitt ausgebildet sind.

11. In der Hand gehaltene Diktiereinrichtung nach Anspruch 10, **dadurch gekennzeichnet, dass** sie mit Kopplungsmittel versehen ist, um mechanisch und elektrisch mit Kopplungsmitteln einer abnehmbaren Festkörperspeichereinheit zusammenzuwirken.

12. In der Hand gehaltene Diktiereinrichtung nach Anspruch 11, **dadurch gekennzeichnet, dass** die Kopplungsmittel einer international standardisierten Schnittstelle gemäß sind.

13. In der Hand gehaltene Diktiereinrichtung nach Anspruch 12, **dadurch gekennzeichnet, dass** die genannte Schnittstelle eine PCMCIA-Schnittstelle ist.

14. In der Hand gehaltene Diktiereinrichtung nach einem der Ansprüche 10 bis 13, **dadurch gekennzeichnet, dass** die Datenkompressionsmittel ausgebildet sind, um an dem Sprachsignal einen Datenkompressionsschritt in einem von zumindest zwei unterschiedlichen Datenkompressionsmodi auszuführen, wobei zumindest einer der genannten zumindest zwei unterschiedlichen Datenkompressionsmodi ein verlustbehafteter Datenkompressionsmodus ist.

15. Transkriptionseinrichtung zum Transkribieren von Sprachnachrichten, die Datenexpansionsmittel umfasst, die ausgebildet sind, um einen Datenexpansionsschritt an einem in Speichermitteln gespeicherten datenkomprimierten Sprachsignal auszuführen, wobei das genannte datenkomprimierte Sprachsignal in einem von zumindest zwei unterschiedlichen Datenkompressionsmodi datenkomprimiert ist, wobei die zumindest zwei unterschiedlichen Datenkompressionsmodi zu unterschiedlichen Datenkompressionsverhältnissen führen, wenn sie auf das gleiche Sprachsignal angewendet werden, wobei das datenkomprimierte Sprachsignal in den Speichermitteln in Datendateien (Bᵢ, Bᵢ₊₁, Bᵢ₊₂) gespeichert ist, die Abschnitte des datenkomprimierten Sprachsignals (IP) umfassen, **dadurch gekennzeichnet, dass** die Datendateien einen Headerabschnitt (HDR) umfassen, in dem ein Kennungssignal gespeichert ist, wobei das Kennungssignal den beim Datenkomprimieren des Sprachsignals selektierten Datenkompressionsmodus identifiziert, wobei die Datenexpansionsmittel zum Rückgewinnen des Kennungssignals aus Headerabschnitten ausgebildet sind und ausgebildet sind, um in Reaktion auf das Kennungssignal einen von zumindest zwei unterschiedlichen Expansionsmodi an der in den Dateien gespeicherten datenkomprimierten Information auszuführen, um eine Kopie des Sprachsignals zu erhalten.

16. Transkriptionseinrichtung nach Anspruch 15, **dadurch gekennzeichnet, dass** die Speichermittel die Form einer abnehmbaren Festkörperspeichereinheit haben und dass die Transkriptionseinrichtung mit Kopplungsmitteln versehen ist, um mechanisch und elektrisch mit Kopplungsmitteln der Festkörperspeichereinheit zusammenzuwirken.

17. Transkriptionseinrichtung nach Anspruch 16, **dadurch gekennzeichnet, dass** die Kopplungsmittel einer international standardisierten Schnittstelle gemäß sind.

18. Transkriptionseinrichtung nach Anspruch 17, **dadurch gekennzeichnet, dass** die genannte Schnittstelle eine PCMCIA-Schnittstelle ist.

19. Abnehmbare Festkörperspeichereinheit, mit einem datenkomprimierten Sprachsignal, wobei das genannte datenkomprimierte Sprachsignal in einem von zumindest zwei unterschiedlichen Datenkompressionsmodi datenkomprimiert ist, wobei die zumindest zwei unterschiedlichen Datenkompressionsmodi zu unterschiedlichen Datenkompressionsverhältnissen führen, wenn sie auf das gleiche Sprachsignal angewendet werden, wobei das datenkomprimierte Sprachsignal in der Speichereinheit in Datendateien gespeichert ist, die Abschnitte (IP) des datenkomprimierten Sprachsignals umfassen, **dadurch gekennzeichnet, dass** die Datendateien einen Headerabschnitt (HDR) umfassen, in dem ein Kennungssignal gespeichert ist, wobei das Kennungssignal den beim Datenkomprimieren des Sprachsignals selektierten Datenkompressionsmodus identifiziert.

20. Festkörperspeichereinheit nach Anspruch 19, **dadurch gekennzeichnet, dass** sie mit Kopplungsmitteln versehen ist, um die Speichereinheit mechanisch und elektrisch mit einem PC zu koppeln.

21. Festkörperspeichereinheit nach Anspruch 20, **dadurch gekennzeichnet, dass** die Kopplungsmittel ausgebildet sind, um die Speichereinheit mechanisch und elektrisch mit einer international standardisierten Schnittstelle des PC zu koppeln.

22. Festkörperspeichereinheit nach Anspruch 21, **dadurch gekennzeichnet, dass** die genannte Schnittstelle eine PCMCIA-Schnittstelle ist.

## Revendications

1. Système de dictée, comprenant un dispositif de dictée tenu à la main (1) destiné à stocker un signal vocal dans des moyens de mémoire (15), le dispositif comportant des moyens de compression de données (30) destinés à compresser le signal vocal en un signal vocal ayant subi une compression de données, des moyens de stockage destinés à stocker le signal vocal ayant subi une compression de données dans les moyens de mémoire, les moyens de compression de données étant aptes à exécuter une étape de compression de données sur le signal vocal selon l'un d'au moins deux modes de compression de données différents, les au moins deux modes de compression de données différents donnant des rapports de compression de données différents lorsqu'ils sont appliqués au même signal vocal, lesdits au moins deux modes de compression de données différents pouvant être sélectionnés par un utilisateur, les moyens de compression de données étant en outre aptes à créer des fichiers de données (Bᵢ, Bᵢ₊₁, Bᵢ₊₂) comprenant des parties du signal vocal ayant subi une compression de données (IP) et étant aptes à produire un signal d'identification identifiant le mode de compression de données sélectionné, **caractérisé en ce que** les fichiers de données comprennent une partie d'en-tête (HDR), les moyens de compression de données étant aptes à stocker ledit signal d'identification dans ladite partie d'en-tête.

2. Système de dictée tenu à la main suivant la revendication 1, **caractérisé en ce que** les moyens de mémoire comprennent une unité de mémoire à semi-conducteurs amovible destinée à stocker les fichiers de données, l'unité de mémoire à semi-conducteurs étant dotée de moyens de connexion destinés à connecter par voies mécanique et électrique l'unité de mémoire au dispositif de dictée tenu à la main.

3. Système de dictée suivant la revendication 2, **caractérisé en ce que** les moyens de connexion sont en outre aptes à connecter par voies mécanique et électrique l'unité de mémoire à un ordinateur personnel.

4. Système de dictée suivant la revendication 3, **caractérisé en ce que** les moyens de connexion sont aptes à connecter par voies mécanique et électrique l'unité de mémoire à une interface de l'ordinateur personnel standardisée au niveau international.

5. Système de dictée suivant la revendication 4, **caractérisé en ce que** ladite interface est une interface PCMCIA.

6. Système de dictée suivant l'une quelconque des revendications 2 à 5, **caractérisé en ce que** l'unité de mémoire à semi-conducteurs comprend une mémoire EEPROM.

7. Système de dictée suivant l'une quelconque des revendications 2 à 5, **caractérisé en ce que** l'unité de mémoire à semi-conducteurs comprend une unité de mémoire flash effaçable.

8. Système de dictée suivant l'une quelconque des revendications 1 à 5, **caractérisé en ce que** l'unité de mémoire à semi-conducteurs comprend une batterie de sauvegarde.

9. Système de dictée suivant l'une quelconque des revendications précédentes, **caractérisé en ce que** les moyens de compression de données sont aptes à exécuter une étape de compression de données sur le signal vocal selon l'un d'au moins deux modes de compression de données différents, au moins l'un desdits deux modes de compression de données différents étant un mode de compression de données avec pertes.

10. Dispositif de dictée tenu à la main (1) destiné à être utilisé dans le système tel que revendiqué dans l'une quelconque des revendications précédentes, le dispositif comportant des moyens de compression de données (30) destinés à compresser le signal vocal en un signal vocal ayant subi une compression de données, les moyens de compression de données étant aptes à exécuter une étape de compression de données sur le signal vocal selon l'un d'au moins deux modes de compression de données différents, les au moins deux modes de compression de données différents donnant des rapports de compression différents, lesdits au moins deux modes de compression de données différents pouvant être sélectionnés par un utilisateur, les moyens de compression de données étant en outre aptes à créer des fichiers de données (Bᵢ, Bᵢ₊₁, Bᵢ₊₂) comprenant des parties du signal vocal ayant subi une compression de données (IP) et étant aptes à produire un signal d'identification identifiant le mode de compression de données sélectionné, **caractérisé en ce que** les fichiers de données comprennent une partie d'en-tête (HDR), les moyens de compression de données étant aptes à stocker ledit signal d'identification dans ladite partie d'en-tête.

11. Dispositif de dictée tenu à la main suivant la revendication 10, **caractérisé en ce qu'**il est doté de moyens de connexion coopérant par voies mécanique et électrique avec les moyens de connexion d'une unité de mémoire à semi-conducteurs amovible.

12. Dispositif de dictée tenu à la main suivant la revendication 11, **caractérisé en ce que** les moyens de connexion sont conformes à une interface standardisée au niveau international.

13. Dispositif de dictée tenu à la main suivant la revendication 12, **caractérisé en ce que** ladite interface est une interface PCMCIA.

14. Dispositif de dictée tenu à la main suivant l'une quelconque des revendications 10 à 13, **caractérisé en ce que** les moyens de compression de données sont aptes à exécuter une étape de compression de données sur le signal vocal selon l'un d'au moins deux modes de compression de données différents, au moins l'un desdits au moins deux modes de compression de données différents étant un mode de compression de données avec pertes.

15. Dispositif de transcription destiné à transcrire des messages vocaux, comprenant des moyens de décompression de données aptes à exécuter une étape de décompression de données sur un signal vocal ayant subi une compression de données, stocké dans des moyens de mémoire, ledit signal vocal à compression de données ayant subi une compression de données selon l'un d'au moins deux modes de compression de données différents, les au moins deux modes de compression de données différents donnant des rapports de compression de données différents lorsqu'ils sont appliqués au même signal vocal, le signal vocal ayant subi une compression de données étant stocké dans les moyens de mémoire dans des fichiers de données (Bᵢ, Bᵢ₊₁, Bᵢ₊₂) comprenant des parties du signal vocal ayant subi une compression de données (IP), **caractérisé en ce que** les fichiers de données comprennent une partie d'en-tête (HDR) dans laquelle un signal d'identification est stocké, le signal d'identification identifiant le mode de compression de données sélectionné pendant la compression de données du signal vocal, les moyens de décompression des données étant aptes à récupérer le signal d'identification des parties d'en-tête et à exécuter l'un des au moins deux modes de décompression différents sur les informations ayant subi une compression de données stockées dans les fichiers en réaction au signal d'identification, de manière à obtenir une réplique du signal vocal.

16. Dispositif de transcription suivant la revendication 15, **caractérisé en ce que** les moyens de mémoire se présentent sous la forme d'une unité de mémoire à semi-conducteurs amovible et **en ce que** le dispositif de transcription est doté de moyens de connexion destinés à coopérer par voies mécanique et électrique avec des moyens de connexion de l'unité de mémoire à semi-conducteurs.

17. Dispositif de transcription suivant la revendication 16, **caractérisé en ce que** les moyens de connexion sont conformer à une interface standardisée au niveau international.

18. Dispositif de transcription suivant la revendication 17, **caractérisé en ce que** ladite interface est une interface PCMCIA.

19. Unité de mémoire à semi-conducteurs amovible, comprenant un signal vocal ayant subi une compression de données, ledit signal vocal à compression de données subissant une compression de données selon l'un d'au moins deux modes de compression de données différents, les au moins deux modes de compression de données différents donnant des rapports de compression de données différents lorsqu'ils sont appliqués au même signal vocal, le signal vocal ayant subi une compression de données étant stocké dans l'unité de mémoire dans des fichiers de données comprenant des parties (IP) du signal vocal ayant subi une compression de données, **caractérisée en ce que** les fichiers de données comprennent une partie d'en-tête (HDR) dans laquelle un signal d'identification est stocké, le signal d'identification identifiant le mode de compression de données sélectionné pendant la compression de données du signal vocal.

20. Unité de mémoire à semi-conducteurs suivant la revendication 19, **caractérisée en ce qu'**elle est doté de moyens de connexion destinés à connecter par voies mécanique et électrique l'unité de mémoire à un ordinateur personnel.

21. Unité de mémoire à semi-conducteurs suivant la revendication 20, **caractérisée en ce que** les moyens de connexion sont aptes à connecter par voies mécanique et électrique l'unité de mémoire à une interface de l'ordinateur personnel standardisée au niveau international.

22. Unité de mémoire à semi-conducteurs suivant la revendication 21, **caractérisée en ce que** ladite interface est une interface PCMCIA.
